# EUROPEAN PATENT APPLICATION

(11) **EP 1 872 854 A1**
(43) Date of publication of application: **02.01.2008**
(21) Application number: 06076343.0
(22) Date of filing: 30.06.2006
(51) Int. Cl.: B01L 3/00

(54) **Improved multi-well assay plate**

(71) Applicant: PerkinElmer, Inc., Wellesley, Massachusetts 02481-4078 (US); ITB Precisietechniek Holding B.V., 5281 RN Boxtel (NL)
(72) Inventor: Super, Willem, 7814 XX Emmen (NL); Roth, Cornelis Willem, 7827 LR Emmen (NL); van Loon, Marcus Petrus Waltherus, 5715 AB Lierop (NL); van Hees, Robertus Petrus Maria, 2091 EM Middelbeers (NL)
(74) Representative: van Loon, C.J.J.

(57) **Abstract**

The invention relates to the field of analytical chemistry, in particular to multi-well assay plates for use in high throughput (bio)chemical and biological assays which rely on luminescence detection. Provided is a multi-well assay plate comprising a top layer including walls defining a plurality of adjacent sample wells for receiving assay samples, and a bottom layer defining the bottom of the wells, having a bottom surface facing away from the wells, characterized in that said bottom surface is provided with a plurality of ribs.

## Description

### FIELD OF THE INVENTION

The invention relates to the field of analytical chemistry, in particular to multi-well assay plates for use in high throughput (bio)chemical and biological assays which rely on luminescence detection.

### BACKGROUND OF THE INVENTION

Numerous methods and systems have been developed for conducting chemical, biochemical and/or biological assays. These methods and systems are essential in a variety of applications including medical diagnostics, food and beverage testing, environmental monitoring, manufacturing quality control, drug discovery and basic scientific research. Depending on the application, it is desirable that assay methods and detection systems have one or more of the following characteristics: i) high throughput, ii) high, sensitivity, iii) large dynamic range, iv) high precision and/or accuracy, v) low cost, vi) low consumption of reagents, vii) compatibility with existing instrumentation for sample handling and processing, viii) short time to result, ix) insensitivity to interferents and complex sample matrices and x) uncomplicated format. There is substantial value to new assay methods and to objects/systems for use in such methods that incorporate improvements in these characteristics or in other performance parameters.

Typically, samples and reagents are stored, processed and/or analyzed in multi-well assay plates (also known as multi-well test plates, microplates or microtiter plates). Multi-well assay plates can take a variety of forms, sizes and shapes. For convenience, some standards have appeared for some instrumentation used to process samples for high throughput assays. Multi-well assay plates are typically made in standard sizes and shapes and having standard arrangements of wells. Some well established arrangements of wells include those found on 96-well plates (12 x8 array of wells), 384-well plates (24 x16 array of wells) and 1536-well plate (48 x 32 array of well). The Society for Biomolecular Screening (SBS) has published recommended microplate specifications for a variety of plate formats (see, http://www. sbsonline org). For example, SBS-standardized plates have the standardized dimensions of 14.35 mm in height, 85.48 mm in width and 127.76 mm in length.

Assays carried out in standardized plate formats can take advantage of readily available equipment for storing and moving these plates as well as readily available (robot) equipment for rapidly dispensing liquids in and out of the plates. A variety of instrumentation is commercially available for rapidly measuring a signal, such as radioactivity, fluorescence, chemiluminescence, and optical absorbance, in or from the wells of a plate.

To ensure that the detection of signals in or from the wells of a plate, e.g. radioactivity, fluorescence, chemiluminescence and/or optical absorbance, can take place with high precision and accuracy, the overall "flatness" of the plate is of great importance. Any deviation from an optimal flatness will result in decreased accuracy of detection and reduced data quality. Also, it can cause mishandling problems in automated environments. It is the flatness of the assay well bottoms, in particular the inter-well flatness, that is critical for use with optical imaging devices, e.g. a CCD-imager, and other types of automated equipment. Thus, one of the current challenges in the field of microplate design is to improve the flatness of a multi-well assay plate, especially that of flat bottom well plates. The plate flatness, sometimes also referred to as bottom flatness, can be defined as the range between which the distance from the well bottoms to a support surface differs. For instance, a 96- well plate having a flatness of less than 300 µm indicates that the well bottoms of all the 96 wells are within a distance of maximally 300 µm of each other.

One offering of flat-bottom 1536- well or 3456-well formats that is optimized for bottom-reading microplates readers and cell culture applications includes a molded frame comprising walls defining sample wells. The bottom of the wells is formed by an 100 µm unpigmented sheet to provide a flat (within 250-300 µm) window for optical measurements of each well. A drawback of this type of plate is that it consists of two component (frame and sheet) and that it cannot be manufactured as a unitary piece. Instead, an injection molded frame needs to be assembled with the sheet forming the well bottoms. Furthermore, a plate flatness of 250-300 µm across wells is often not sufficient to obtain highly accurate measurements from the wells.

Also available is a two-part plate having a transparent bottom. Therein, the bottom of the wells is made of an inorganic material, in particular glass. The plate is manufactured by contacting an upper plate having openended wells made from a polymeric material containing a silane and infrared absorbing particle with a substantially flat glass sheet lower plate. By heating the upper plate using infrared welding technology, the molten upper plate polymer wets the lower glass plate such that the upper and lower plate are covalently bonded upon cooling. Whereas the plates display a good flatness across individual wells and across the entire plate, their material and method of manufacture is expensive and time consuming.

### SUMMARY

In an attempt to further improve multi-well assay plate performance and data quality, it is an object of the present teachings to provide a multi-well test plate having an improved well bottom flatness compared to other multi-well assay plates. In particular, it is an aim to provide a high density multi-well assay plate having an inter-well bottom flatness within approximately 150 µm, preferably within approximately 100 µm, which may be produced costeffectively, for example, by injection molding as a unitary piece.

These goals are met by a surprising finding that a unique flatness both across individual wells and across the entire plate can be achieved by providing the bottom surface of a multi-well assay plate with multiple ribs. The present teachings therefore provide a multi-well assay plate comprising a top layer including walls defining a plurality of adjacent sample wells for receiving assay samples, a bottom layer defining the bottom of the wells, having a bottom surface facing away from the wells, characterized in that said bottom surface is provided with a plurality of ribs.

Also provided is a method for producing the plate. A further aspect relates to the use of the plate for the storage and/or assaying of test samples.

### BRIEF DESCRIPTION OF THE DRAWINGS

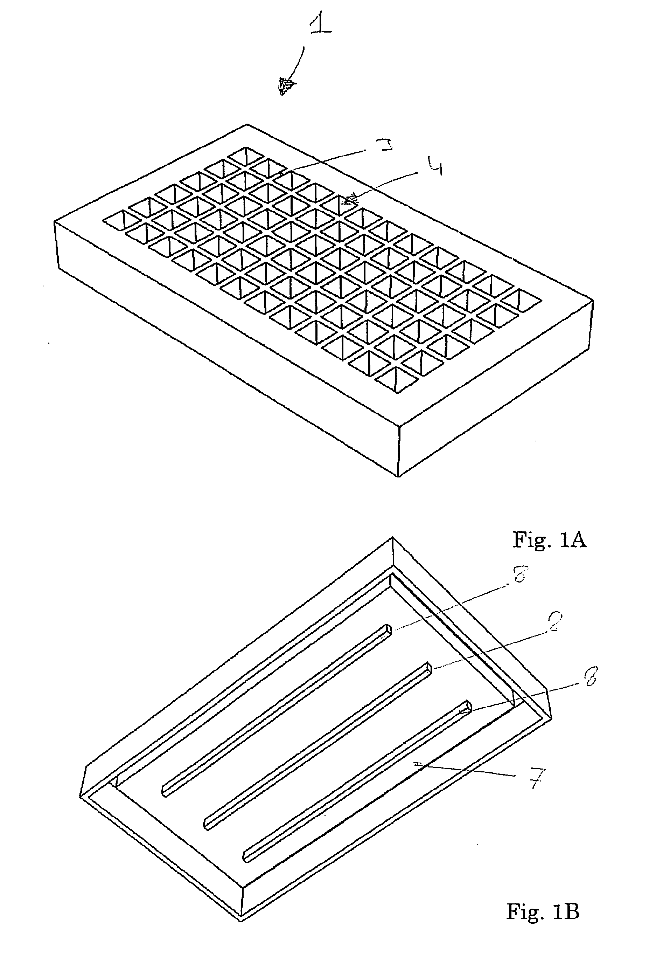

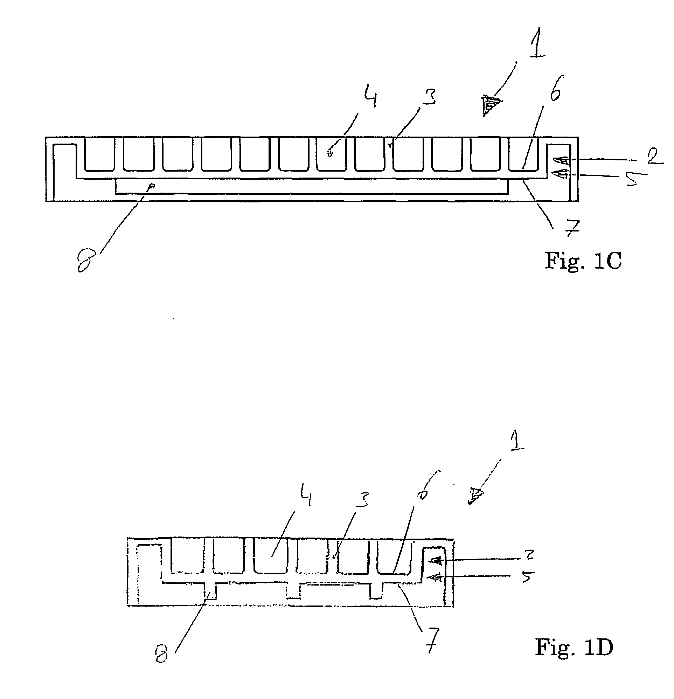

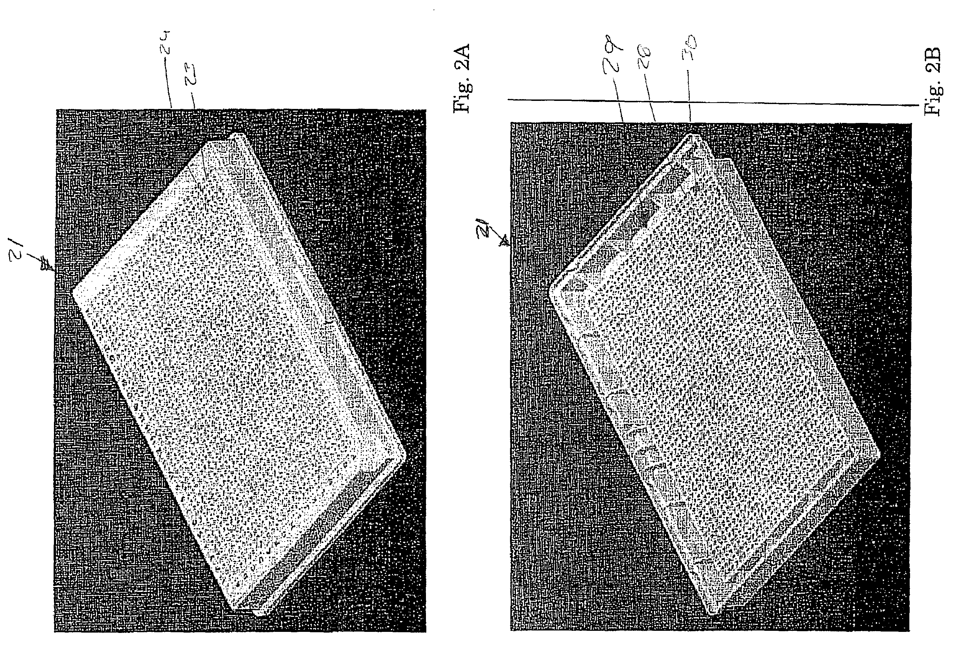

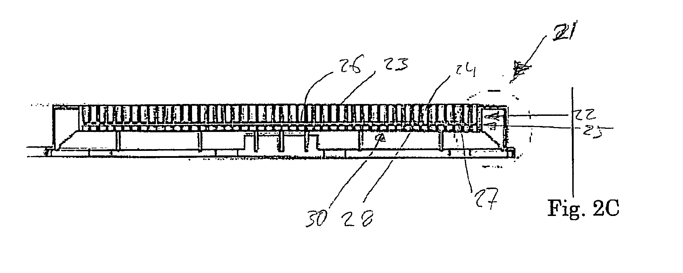

Fig. 1A shows a perspective top view of one embodiment of a multi-well assay plate according to the invention, comprising a top layer, a bottom layer, a support frame, and multiple ribs. Fig. 1B shows a perspective bottom view of the multi-well assay plate shown in Fig. 1A, and Figs. 1C-1D show different side views in section of the multi-well assay plate shown in Fig. 1A. Figs. 2A shows a perspective view of another embodiment of a multi-well assay plate according to the invention. Fig. 2B shows a perspective bottom view of the multi-well assay plate shown in Fig. 2A, and Fig. 2C shows a side view in section of the multi-well assay plate shown in Fig. 2A.

### DETAILED DESCRIPTION OF THE INVENTION

The process of injection molding, which is a typical method for making multi-well plates, produces internal forces in the product. These internal forces tend to warp the plate and reduce the plate flatness. These forces, and thus the warping of the well plate, depend on many factors such as the injection pressure, position of the injection points in the plate, temperature of the mold, temperature of the plastic, and the design of the multi-well assay plate. The warping or bending of the plate may occur in many forms and patterns. For example, the warping may occur especially near the sides of the bottom surface or only on the middle, and the plate may warp in a wave pattern or in a convex or concave form.

Without wishing to be bound to any theory, it is believed that the ribs on the bottom side of a multi-well assay plate according to the present teachings compensate for internal forces within the assay plate, which tend to bend or warp it. As a result, deformation of the well bottoms during their manufacture is reduced.

To compensate for specific warp patterns, the ribs may vary in height, width and/or length. Areas which are relatively prone to warping may for example be provided with wider, and/or higher ribs, which may extend across the entire plate bottom. The ribs in areas less prone to warping may be thinner, and/or smaller, and/or extend across only a partial area of the plate bottom.

The term 'rib' as used herein refers to a protrusion running along at least a part of the bottom surface of a bottom layer of a multi-well plate. The rib is integrated with the bottom layer. The terms 'rib' and 'bottom layer' are merely used to designate different parts of the plate geometry.

Multiple ribs running along the bottom surface of the plate are thought to reduce the warping, thereby keeping the well bottoms at essentially the same level. In one embodiment, a multi-well assay plate comprising a rib structure at the bottom surface of the layer forming the bottom of the wells has a well bottom flatness of up to approximately 200 µm, preferably up to approximately 150 µm, more preferably up to approximately 100 µm, for example, approximately 75 µm or even less.

The exact position, size (e.g., length, thickness or width, etc.), configuration (e.g., spacing between ribs, diagonal across bottom, parallel and/or orthogonal to plate edges, on bottom side with wells, on bottom side opposite wells, etc.), and geometry (e.g., curvilinear, linear, etc.) of a multiple rib embodiment can vary. The ribs can be configured in straight and/or curved lines along the bottom surface in a variety of different configurations and geometries. For example, ribs forming concentric circles or squares are possible, as are ribs forming a honeycomb pattern. Substantially straight (e.g., substantially uncurved) ribs are preferred in some embodiments, but such example is provided for illustration and not limitation. In such an embodiment, the ribs can be substantially parallel to each other. The spacing between the individual ribs can vary or be the same. The ribs can be the same in terms of size, spacing, geometry, resulting in a homogeneous rib pattern, or as provided herein, variations of such parameters can provide for a distinct pattern. A distinct, uneven spacing can result for example in ribs across the centre part of the bottom surface running more closely together than the ribs near the edges of the plate. However, it may be preferred to evenly distribute ribs over the bottom surface of the plate, running substantially parallel to, and at substantially equal distances from each other (while also being either substantially parallel to, or substantially orthogonal to, the plate sides). An embodiment exhibiting desirable plate flatness was observed when said ribs run parallel with the walls along the opposite surface of the bottom layer, defining the wells.

With reference to Figures 1A-1D, there is shown a multi-well assay plate 1 comprising a top layer 2 including walls 3 defining a plurality of adjacent sample wells 4 for receiving assay samples. The wells 4 have a rectangular shape and are configured in two-dimensional arrays, forming a rectangular well area. The bottom layer 5 of the assay plate defines the bottom of the wells 4, its top surface being the bottom surface 6 of the wells 4. The bottom layer 5 has a bottom surface 7 facing away from the wells 4.

The assay plate 1 further comprises a support frame, framing the (rectangular) well area. The support frame provides a support for the well plate 1 when standing on a support surface, for example a tabletop, and extends from the top surface of the well plate 1 beyond the bottom surface 7 of the well plate, providing a clearance between the bottom surface of the plate and a support surface. The form of the frame also provides the well plate with extra stiffness, thus preventing excessive warping.

The bottom surface 7 of the assay plate 1 is provided with a plurality of ribs 8, running parallel to each other in the longitudinal direction of the bottom surface 7 of the bottom layer 5.

In an alternative embodiment the ribs lie for example more closely together in the middle of the bottom surface, providing extra support in this area against warping.

It can be understood that other embodiments of microwell plates can exist without departing from the scope of the present teachings. For example, the illustrated embodiments use rectangular wells in a rectangular configuration, although such choices are merely arbitrary and other selections can be made within the scope of the invention. With reference to Figures 2A-2C, in yet another alternative embodiment according to the invention, the bottom surface is provided with multiple parallel, straight ribs crossing each other to form a bottom grid structure with ribs running e.g. perpendicular to each other in two directions.

In a preferred embodiment the ribs are of essentially equal height, and/or of essentially equal width. To provide sufficient compensation for the warping forces in the top layer of the plate, it is preferred that the height of ribs is preferably at least approximately 10%, more preferably at least approximately 15%, most preferably at least approximately 20% of the height of the walls defining the sample wells. For example, in one embodiment a multi-well plate comprises a top layer with walls of approximately 4 to 5 mm in height defining sample wells and a bottom surface provided with ribs of approximately 1.5 to 2 mm in height. The height of the ribs is preferably less than approximately 80%, more preferably less than approximately 70%, most preferably less than approximately 50% of the height of the walls. The width is preferably, but not limited to being, equal to that of the walls defining the sample wells.

In a further embodiment, the ribs on the bottom surface of the bottom layer are positioned under at least some of the walls of the top layer defining the sample wells while there are no ribs under the well bottom areas. This provides a good compensation of the warping forces that may occur in the top layer, whereas sink marks in the bottom surfaces of the wells are avoided.

By varying the number of and/or spacing between the ribs, the dimensions of the ribs can remain constant. Thus, for example the rib in an area particularly prone to warping may have the same width as ribs in areas less prone to warping. This can be advantageous because relatively wide ribs may cause sink marks in the top surface of the bottom layer, and thus in the bottom surface of the wells.

However, other modifications, variations and alternatives are also possible. The specifications and drawings are, accordingly, to be regarded in an illustrative rather than in a restrictive sense. The word 'comprising' does not exclude the presence of other elements or steps then those listed in a claim. Furthermore, the words 'a' and 'an' shall not be construed as limited to 'only one', but instead are used to mean 'at least one', and do not exclude a plurality. The mere fact that certain features are recited in mutually different claims does not indicate that a combination of these features cannot be used to advantage.

With reference to Figure 2A-2C, in an alternative embodiment according to the invention, a multi-well assay plate 21 is provided, comprising a top layer 22 including walls 23 defining a plurality of adjacent sample wells 24 for receiving assay samples. A bottom layer 25 of the assay plate defines the bottom of the wells 24, its top surface being the bottom surface 26 of the wells 24. The bottom layer 25 has a bottom surface 27 facing away from the wells 24. The bottom surface 27 of the bottom layer is provided with multiple parallel, straight ribs 28 crossing each other to form a bottom grid structure 29 with ribs 28 running e.g. perpendicular to each other in two directions, as is best shown in fig. 2B. Thus a multi-well plate 21 is provided comprising at its bottom surface 27 multiple ribs 28 forming a bottom grid structure 29 that mirrors the grid structure formed by the walls 23 in the top layer 22, thereby forming a plurality of "mock wells" 30 at the plate bottom. Preferably, the number of mock wells 30 is equal to the number of assay wells 24. For example, provided is a 1536-well plate 21 comprising at its bottom surface 27 1536 mock wells, preferably in line with the assay wells 24 present in the top layer 22. In other words, it may be especially advantageous if, when seen in a side view in section as is shown in Fig. 2C, the walls 23 defining the wells 24 on the top side of the bottom layer 25 seem to extend on the opposite side of the bottom layer 25 to form the ribs 28 defining the mock wells 30.

The mock wells at the bottom surface of the plate do not need to be an exact copy of the wells in the top layer of the well plate for mirroring the grid structure formed by the walls. For example, while the assay wells may have a circular circumference, the mock wells may have an angular circumference, also, where the corner between the walls and the bottom of the assay wells is chamfered to prevent liquids from creeping up the walls, this is not needed in the mock wells. Further, the depth of the mock wells can be the same or distinct from the depth of the test wells. In one embodiment, the mock wells have a depth of less than 100%, preferably less than 80% more preferably less than 60%, most preferably less than 50% of said essay wells. Furthermore, the assay plate may, when standing on a support platform, at least partially rest on the ribs .

From the foregoing, it will be clear to the skilled person, that within the framework of invention as set forth in the claims also many variations other than the examples described above are conceivable. For instance, the well plates may have any number of wells of any size or shape, arranged in any pattern or configuration, and be composed of a variety of different materials.

The assay wells of the plate are typically arrayed in a planar pattern to provide high-density, low-volume formats for automated liquid handling and assay systems capable of manipulating and assaying in parallel multiple small volume samples. The wells can be any volume or depth. Wells can be made in any cross-sectional shape (in plan view) including square, sheer vertical walls or conical walls. The plate may have a thickness in a range between approximately 0.5 mm and approximately 15 mm. Preferred embodiments of the invention are multi-well assay plates that use industry standard (e.g. SBS) multi-well plate formats for the number, size, shape and configuration of the plate and wells. A plate having a high-density planar array of sample wells in which dimensions of the wells and their positions on the array are scaled according to the proposed standards enable compatibility with the wide range of automated instrumentation designed to be compliant with multi-well platforms manufactured to the proposed standards. Examples of standard formats include 96-, 384-, 684-, 1536-, and 3456-well assay plates, with the wells configured in two-dimensional arrays.

An issue that arises when dealing with assay plates comprising a high to very high number of small volume assay wells is sample evaporation, e.g., during storage, manipulation and/or analysis of the sample. The ratio of surface area to volume of a well of a typical 3456-well plates is about four times that of a 96-well plate. Since evaporation rate is directly proportional to exposed surface area, a 1 mm diameter well of a 3456-well plate would lose about 40% of its volume in the same time that a 7 mm well of a 96-well plate would lose 10%. Furthermore, small wells at the plate edges evaporate significantly faster than small wells at the interior of the assay plate, which can be detrimental to an experiment being run or to a chemical being stored in a plate. In order to at least partially overcome sample evaporation, a multi-well assay plate of the invention may comprise multiple evaporation control wells or "dummy" wells in the top layer of the plate. The teaching of US Patent application 60/493,415 and PCT application PCT/US04/13516 related thereto can be used for the design of a plate comprising dummy wells. For example, the dummy wells are preferably also defined by wall disposed within the top layer. The dummy wells preferably form a ring around the array of sample wells. The depth of the dummy wells may differ from that of the sample wells. Thus, in an embodiment the plate also incorporates in the top layer an arrangement of wells not used fro assay or chemical storage, but which can be filled with an assay liquid or storage solvent to mitigate evaporation of liquid in the wells used for assay or storage. According to the invention, the dummy wells are preferably also mirrored on the bottom surface.

In addition, the plate may contain additional useful features such as indentations for the accommodation of lids to maintain a closed environment surrounding the liquid contents of the wells, and/or markings to enable optically guided automated alignment of the plate with instrumentation.

A further aspect relates to the manufacture of a multi-well assay plate of the invention. The plate can be easily formed as a unitary piece by injection molding according to standard procedures. It is also possible to use inserts to form the ribs.

Preferably, the plate is formed from a single material that combines desirable optical, mechanical, and chemical inertness and resistance properties so that the same plate can be inexpensively manufactured and then utilized for the various different tasks of (automated) chemical, biochemical and biological assays.

In an exemplary embodiment, a suitable polymer or mixture of polymers is injected into a mold built of (e.g. stainless) steel using a single or a a number of injection gates placed on the outer walls of the plate. The mold typically has polished core pins to create the sample wells and a stripper plate to remove the part from the core pins after it solidifies.

Many types of polymers can be used for the manufacture of a multi-well plate as provided herein. The plate can be made from rigid thermoplastic material such as polystyrene (PS), polyethylene (PE) or polypropylene (PP). Preferably, the material of choice has a low mold shrinkage (e.g., less than about 0.4%) and low melt viscosity to allow manufacture of small (e.g. less than about 1 mm) features on the plate.

A multi-well plate can be made from more than one material, for example by applying two component injection molding during the fabrication. According to one preferred embodiment, the material comprises polystyrene blended with High Impact Polystyrene (HIPS) to reduce the brittleness of the material. Preferably, between approximately 4 and approximately 16 wt% HIPS is blended with the polystyrene, more preferably between about 8 and about 12 wt%. The plate is preferably made of an inexpensive material that is generally impervious to reagents typically encountered in fluorescence (e.g. ECL) measurements, resistant to the absorption of biomolecules, and can withstand modest levels of light and heat. Advantageously, the plate material is impervious to organic solvents typically used to dissolve chemical libraries for high throughput screening.

In a specific aspect, the multi-well plate of the invention is made of a material that exhibits low auto-fluorescence when illuminated with screening wavelengths, in the UV or visible range. Such a plate is particularly suitable for fluorescence and other spectrometric measurements due to the low intrinsic fluorescence of the well bottom. Preferably, the material exhibits autofluorescence at screening wavelengths below 5%, more preferably below 4%, and further substantially 3% or less.

According to one embodiment, a material for a multi-well plate is or includes cyclo-olefin copolymer (COC). Other suitable materials include styrene acrylonitrile (SAN) and Barex ® resins.

A microplate provided herein can be transparent (clear) or it can be non-transparent. Colored plates can be made using colorants known in the art. Typical colorants include TiO₂ (white), Carbon Black, UV-absorbers (Yellow). The person skilled in the art will recognize that, depending on the desired properties of the plate, other types of additives may be included.

A further aspect of the invention relates to the use of a multi-well assay as provided herein, for example in methods for assaying multiple samples and/or the storage of samples.

The multi-well plates can be used in automated and integrated systems in which small volumes of stored chemical compounds are transferred from one multi-well platform used for storage purposes to another multi-well platform used to perform assays for chemical or biological activities of the same compounds, particularly automated screening of low-volume samples for new drugs, agrochemicals, food additives and cosmetics.

In one embodiment, a method is provided for performing an assay, e.g. a (bio)chemical or biological assay using a plate of the invention. Said method may comprise the steps of employing at least some of the sample wells for performing the assay and analyzing data from measurements performed on the wells. Because of their unprecedented plate flatness, plates of the invention are particularly suitable for highly accurate luminescence, e.g. fluorescence, detection.

Also provided is a method for measuring luminescence from a multi-well assay plate, comprising forming an image of luminescence generated in at least one essay well of a plate according to the invention. Examples of luminescence include fluorescence, bioluminescence and phosphorescence.

Said methods may involve the use of an automated plate reader, particular an automated optical imaging device. In a preferred embodiment, a plate of the invention is used in an assay method comprising detection of a fluorescence signal generated in at least one of the wells using an automated CCD imaging system.

Providing a more uniform and consistent well bottom elevation minimizes or even avoids the need to refocus the imaging system because the distance between CCD camera and well bottom surface is essentially the same from well to well. For example, the PerkinElmer ViewLux™ is an ultrahigh throughput microplate CCD-imager for high sensitivity and fast measurement of light from fluorescence polarization (FP), fluorescence intensity, time-resolved fluorescence (TRF), luminescence and absorbance assays. The detector is a Peltier-cooled CCD camera coupled to an optimized telecentric optical lens. The camera is a back illuminated CCD operating at -100° Celsius. For epifluorescence excitation there is an extremely powerful array of flash-lamps together with high-quality optics. The instrument supports both robot loading and batch mode operation. Up to 64 plates can be loaded for unattended operation. Users can alternate between batch and robot loading according to needs. Because the instrument reads entire plates in one exposure, throughput is not affected by plate density. A throughput of >200,000 samples per hour under continuous operation can be achieved using 1536-well plates reading fluorescence intensity. For fluorescence polarization assays, including plate movement and data handling, typical processing times are less than 90 seconds per plate.

## Claims

1. A multi-well assay plate comprising :
a top layer including walls defining a plurality of adjacent sample wells for receiving assay samples, and
a bottom layer defining the bottom of the wells, having a bottom surface facing away from the wells, **characterized in that** said bottom surface is provided with a plurality of ribs.

2. Assay plate according to claim 1, wherein said ribs are evenly distributed over the bottom surface of the plate.

3. Assay plate according to claim 1 or 2, wherein said ribs are positioned under at least some of the walls in the top layer.

4. Assay plate according to any one of the preceding claims, wherein said ribs are of essentially equal height and/or of essentially equal width.

5. Assay plate according to any one of the preceding claims, wherein the width of said ribs corresponds to the width of the walls defining the wells at the opposite side of the bottom layer.

6. Assay plate according to any one of the preceding claims, wherein said ribs cross each other, preferably in an angle of about 90 degrees, to form a bottom grid structure.

7. Assay plate according to claim 6, wherein said bottom grid structure mirrors the grid structure formed by the walls in the top layer, thereby forming a plurality of mock wells at the plate bottom.

8. Assay plate according to claim 7, wherein the mock wells have a depth of less than, 100%, preferably less than 80% more preferably less than 60%, most preferably less than 50% of said sample wells.

9. Assay plate according to any one of the preceding claims, wherein well bottoms have an intra- and/or inter- well bottom flatness of less than approximately 200 µm, preferably less than approximately 100 µm, more preferably less than approximately 75 µm.

10. Assay plate according to any one of the preceding claims, made as a unitary piece, preferably by injection molding.

11. Assay plate according to any one of the preceding claims, wherein the plate is transparent or non-transparent material, preferably made from a polymer selected from polystyrene (PS), polypropylene (PP), polyethylene (PE), styrene acrylonitrile (SAN) and cyclo-olefin copolymer (COC), or a combination thereof.

12. Assay plate according to any one of the preceding claims, wherein the plate comprises a material of low auto-fluorescence.

13. Assay plate according to any one of the preceding claims, having SBS-standardized dimensions.

14. Assay plate according to any one of the preceding claims, wherein the plate comprises 96, 384, 684, 1536, or 3456 sample wells

15. Use of an assay plate according to any one of claims 1 to 14 for assaying and/or storage of a sample.

16. Method for measuring luminescence from a multi-well assay plate, comprising forming an image of luminescence generated in at least one essay well of a plate according to any one of claims 1 to 14, preferably using an automated plate reader.

17. Method according to claim 16, comprising the use of an optical imaging system, preferably a CCD-imaging system.
